# EUROPEAN PATENT SPECIFICATION

(11) **EP 2 680 645 B1**
(45) Date of publication and mention of the grant of the patent: **09.09.2015**
(21) Application number: 12305767.1
(22) Date of filing: 28.06.2012
(51) Int. Cl.: H04W 48/16

(54) **METHOD AND WIRELESS MOBILE STATION FOR BEACON SCANNING IN WLAN**
VERFAHREN UND DRAHTLOSE MOBILSTATION ZUM ABTASTEN AUF BAKEN IN EINEM WLAN
PROCÉDÉ ET STATION MOBILE SANS FIL DE BALAYAGE DE BALISE DANS UN RÉSEAU LOCAL SANS FIL

(43) Date of publication of application: 01.01.2014
(73) Proprietor: ST-Ericsson SA, 1228 Plan-les-Ouates (CH)
(72) Inventor: Locher, Matthias, 06130 GRASSE (FR)
(74) Representative: Cabinet Plasseraud

(56) References cited:
- US-A1- 2006 003 764
- US-A1- 2006 215 627
- US-A1- 2010 091 657
- US-A1- 2010 265 930

## Description

### TECHNICAL FIELD

The proposed solution relates to beacon scanning in wireless communication networks and, more particularly, to a method and a wireless mobile station for controlling beacon scanning in a Wireless Local Area Network (WLAN) allowing reduction of total time needed for scanning a plurality of channels.

### BACKGROUND

In a WLAN, a geographical area is served by zero or one to several Access Points (APs) of a fixed network, each of which using a single radio channel. Within the same geographical area, wireless mobile stations can operate on one channel of these APs at the time. The channel on which a wireless mobile station can camp on is mainly determined after a wireless mobile station has just been powered-up or when a handover to a corresponding AP has just been performed. The handover is a procedure during which a wireless mobile station moves away from the AP it is currently connected to, and where an attempt is made to switch to a target AP with better radio link quality. At the beginning of these two procedures, there is a requirement for discovering the surrounding APs prior to establishing any communication and then transferring data. This process, named scanning, comprises beacon signal detection and beacon signal information collection. During the process of beacon scanning, the wireless mobile station scans all the channels available defined by country regulatory body by selectively switching to each channel to detect beacon signal associated with the corresponding AP, and collects the beacon signal information sent from the one or more APs which has or have been thus detected. Since a wireless mobile station may not know the time of arrival of the beacon signals that are periodically broadcasted at times different for one AP from the others, the wireless mobile station has to monitor each channel within a channel scanning time window before proceeding with the process of beacon scanning on any subsequent channel or channels considered.

Disadvantageously, this process can be very slow since there are several channels to scan during a total scanning time, where total scanning time is the total time required to scan all channels. In fact, the channel scanning time window of a single channel can take from about 100 ms to about 300 ms.

The process of beacon scanning requires also high power consumption since, after the phase of beacon signal detection, a second phase of beacon signal collection is performed to collect information identifying the detected APs, such as their MAC address. The information to be collected includes, more generally, information associated with the AP and which may be required for any specific application. This beacon signal collection is performed by a decoding unit that is always switched on during the process of beacon scanning, even when no beacon signal is detected within the channel considered.

One possible solution to improve the situation as regards the power consumed during these processes might be to reduce the number of channels to scan. This way, total scanning time would be reduced and the overall power consumed would be reduced as well. Document US 20100091657 A1 describes such a solution. Unfortunately, such a solution would limit the number of APs that could be selected for establishing a communication. In fact, a reduction of the number of channels to scan reduces at the same time the number of potential APs to be connected with. Thus, this solution could potentially eliminate the most suitable APs, in terms of radio link quality, from being discovered prior to establishing a communication over another AP, or to transferring an ongoing communication to another AP in the case of a handover. Another option may comprise reducing the channel scanning time window (i.e. the time spent on scanning a channel). However, this solution requires a prior synchronisation of the time of beacon signal transmission of APs within the same geographical area. Document US 20060215627 A1 describes scanning simultaneously several channels.

### SUMMARY

The above problems may be overcome by scanning simultaneously several channels during a channel scanning time window using a first, e.g. high speed and low performance detection scheme, possibly followed, in a second phase, by a comparatively lower speed and higher performance signal information collection scheme applied to only those channels in which power has been detected during the first phase.

Indeed, a first aspect proposes a method of performing a beacon scanning of wireless Access Points, APs, by a wireless mobile station, at start-up of the wireless mobile station or during handover, in a wireless local area network, WLAN, the method comprising the steps of:
- entering a low power mode of beacon scanning in which a beacon signal detection unit is active and a signal decoding unit is not active, at the beginning of a first channel scanning time window;
- scanning simultaneously a set of channels during the first channel scanning time window in the low power mode of beacon scanning;
- recording within a list, at least information regarding time of presence of beacon signal power detected in the set of channels during the first channel scanning time window in the low power mode of beacon scanning;
- leaving the low power mode of beacon scanning and activating at least the decoding unit at the end of the first channel scanning time window responsive to presence of beacon signal power having been detected within the set of channels in the low power mode of beacon scanning; and,
- decoding, using the list and during a second channel scanning time window subsequent to the first beacon scanning time window, the channels for which beacon signal power has been detected in the low power mode of beacon scanning.

A second aspect relates to a wireless mobile station performing a beacon scanning of wireless Access Points, APs, by a wireless mobile station, at start-up of the wireless mobile station or during handover, in a wireless local area network, WLAN, the wireless mobile station comprising:
- a unit configured for entering a low power mode of beacon scanning in which a beacon signal detection unit is active and a signal decoding unit is not active, at the beginning of a first channel scanning time window;
- a unit configured for scanning simultaneously a set of channels during the first channel scanning time window in the low power mode of beacon scanning;
- a unit configured for recording within a list, at least information regarding time of presence of beacon signal power detected in the set of channels during the first channel scanning time window in the low power mode of beacon scanning;
- a unit configured for leaving the low power mode of beacon scanning and activating at least the decoding unit at the end of the first channel scanning time window responsive to presence of beacon signal power having been detected within the set of channels in the low power mode of beacon scanning; and,
- a unit configured for decoding, using the list and during a second channel scanning time window subsequent to the first beacon scanning time window, the channels for which beacon signal power has been detected in the low power mode of beacon scanning.

Thus, in a wireless mobile station embodying the above-defined features, the process of beacon scanning is performed simultaneously on a set of channels during a channel scanning time window. The simultaneity of the process of beacon detection on several channels used in this technique allows the reduction of the total scanning time and thus decreases the required power consumption while considering all the potential channels.

In fact, more than one channel may be scanned at once during a channel scanning time window equivalent to time required for scanning a single channel according to methods of the prior art using an aggregated, i.e. combined channel having a frequency bandwidth equal to or greater than the sum of the frequency bandwidth of the respective channels considered.

The proposed method may provide particular advantage in situations where it is combined with a mechanism enabling the process of beacon detection to be performed in low power mode of beacon scanning during a channel scanning time window in a first phase of the process of beacon scanning. The main interest of this feature is to reduce even further the wireless mobile station consumption by deactivating, within the wireless mobile station, all the components that can be considered as being unnecessary during the process of beacon signal detection, such as a signal decoding unit for instance. All these components can thus be activated only when necessary, e.g. during one of the next channel scanning time windows having detected beacon signal power within the set of channels, thus leaving the low power mode of beacon scanning.

While all the components that can be considered as being unnecessary during the process of beacon signal detection can be powered-down, the process of beacon signal detection would consist in detecting the presence of beacon signal power within the channels considered without any post-processing of the signals being detected, such as AP related information collection. The post-processing may be performed in a second phase of the process of beacon scanning during a subsequent channel scanning time window. This helps optimising the power consumption of the wireless mobile station during the process of beacon detection since only the minimum required amount of power is used.

In particular, according to embodiments, the set of channels may comprise a number N of adjacent channels, where N is an integer. That case is suitable for most WLAN technologies.

In addition, in particular embodiments, the set of channels may comprise a number N of non- adjacent channels, where N is an integer. That case is suitable for WLAN technologies using bonding techniques where several channels may operate in parallel while not being necessarily adjacent one to the other.

In one embodiment, the duration of the first channel scanning time window is comprised between about 100 ms and about 300 ms. Thus, the overall scanning of a set of channels duration would not last a long as the scanning a single channel as it was performed in the prior art.

In accordance with the proposed solution, the presence of beacon signal power is considered to be detected when corresponding beacon signal strength is greater than a given threshold.

In another embodiment, the list additionally contains information indicating where, whether or how the presence of a beacon signal power was detected such as a channel number, a Boolean value or a beacon signal strength or a range of frequencies.

If desired, particular embodiments may optionally comprise the frequency bandwidth wherein scanning simultaneously a set of channels is performed has a bandwidth equal to or greater than an aggregated bandwidth corresponding to the sum of the respective frequency bandwidths of the set of channels.

### BRIEF DESCRIPTION OF THE DRAWINGS

A more complete understanding of the proposed solution may be obtained from an exemplary consideration of the following description in conjunction with the drawings, in which:
FIG. 1 diagrammatically shows a wireless communication network.
FIG. 2 is a diagram that illustrates implementation of the process of beacon scanning according to the prior art.
FIG. 3 and 4 are diagrams illustrating embodiments of a proposed wireless mobile station.
FIG. 5 is a flow diagram illustrating embodiments of the proposed method.

### DETAILED DESCRIPTION OF EMBODIMENTS

In the drawings, like reference numbers designate like parts in various Figures. Expressions such as "comprise", "include", "incorporate", "contain", "is" and "have" are to be construed in a non-exclusive manner when interpreting the description and its associated claims, namely construed to allow for other items or components that are not explicitly defined also to be present. Reference to the singular is also to be construed in being a reference to the plural, and vice versa.

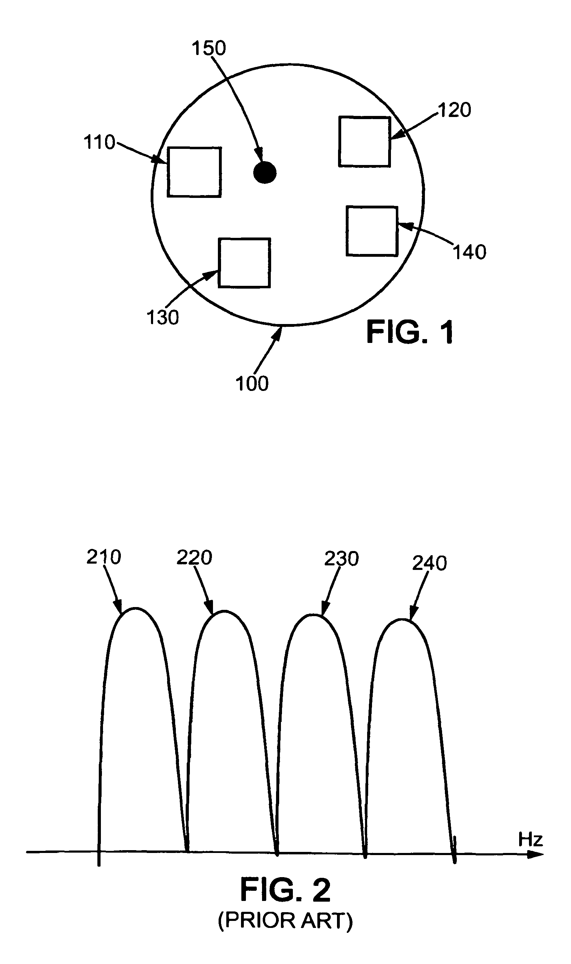

FIG. 1 shows a wireless communication network that may be, e.g., a WLAN network. It is understood, however, that the solution proposed herein is not intended to be limited to this example.

Wireless network 100 comprises a wireless mobile station 150 and several APs 110,120,130,140. The wireless mobile station 150 may be in a state wherein it has just been powered-up or may be in a handover state. The handover is a procedure during which the wireless mobile station 150 moves away from the AP it is currently connected to, and where an attempt is made to switch to a target AP with better radio link quality. In fact, it is mainly at the beginning of these two procedures that the process of beacon scanning is performed. Referring to FIG. 1 and FIG. 2, each AP 110, 120, 130 and 140 is associated with channel 210, 220, 230 and 240, respectively. Each AP 110, 120, 130 and 140 is thus deployed over a single channel 210, 220, 230 and 240, respectively. However, it is important to note that the proposed solution is configured to work even though channels 210, 220, 230 and 240 are not associated with an AP 110, 120, 130 and 140.

FIG. 2 is a diagram that shows an illustration of a prior art implementation of the process of beacon scanning. It comprises four channels 210, 220, 230 and 240 having e.g. the same frequency bandwidth. For example, a common value for a WLAN is 20 MHz in IEEE 802.11g standard or 40 MHz in IEEE 802.11n standard. It shall be noted that channels 210, 220, 230 and 240 are contiguous in FIG. 2 (i.e. they are arranged next to each other), but that they may also be non-contiguous (i.e. they may be separated by several channels belonging to other operations or technologies, or by unused frequency bandwidth) without departing from the scope of the present description. This means, also, that the channels can be either adjacent or non-adjacent channels in terms of channel number as well.

Referring to FIG. 2 which illustrates a prior art scheme, the process of beacon scanning starts on a first channel 210 which is scanned during a given channel scanning time window. This scanning time may have a duration of about 100 ms to about 300 ms. During this process of beacon scanning, there is performed a beacon signal detection of the presence of a beacon signal in channel 210. Thus, in the event of a beacon signal being detected in channel 210, a decoding unit such as a signal demodulator, is used to decode the beacon signal in order to obtain APs information such as their MAC address. The overall process of beacon scanning of channel 210 may last until the end of the channel scanning time window, since the wireless mobile station 150 may not know the time of arrival of the beacon signal that is broadcasted in channel 210. This operation is thus successively repeated exactly in the same way three more times on channel 220, channel 230 and channel 240.

Disadvantageously, this process can be very slow since there are several channels to scan during the total scanning time, which in the example of FIG. 2 would last about 400 ms to 1200 ms in total.

In fact, the total scanning time is mainly determined by the number of channels. In this case, there are four channels 210, 220, 230 and 240 where the channel scanning time window of a single channel can take about 100 to 300 ms. Thus the total scanning time is the product of four times 100 to 300 ms, and more generally is in N times that duration where N is the number of channels to be considered. In this example, it is assumed that there are four channels defined by a country regulatory body such that all defined channels are scanned during the total scanning time. Thus, depending on the available channels and the corresponding frequency bands regulations, the process of beacon scanning could take even longer. For instance, the IEEE 802.11 b standard has eleven channels, while the IEEE 802.11 n has thirteen channels to scan. Thus, a multi-standard IEEE 802.11 b&n station would have at least twenty-seven channels to scan.

In the rest of the description, we will consider embodiments within a wireless mobile station 150 of a wireless communication network 100 such as a WLAN comprising four APs 110, 120, 130 and 140 associated with channel 210, 220, 230 and 240 respectively, each having the same frequency bandwidth of 20 MHz as stated in standard IEEE 802.11g. However, it is important to note that the proposed solution is configured to work even though channels 210, 220, 230 and 240 are not associated with an AP 110, 120, 130 and 140.The wireless mobile station 150 is operating the process of beacon scanning using a frequency bandwidth of 80 MHz as stated in standard IEEE 802.11 ac. Nevertheless, these given examples should be understood a being solely an illustration and in no way limit the scope of the proposed solution. For instance, the scanning bandwidth can be 80MHz, 160MHz or whatever channel bandwidth that could possibly be implemented in a station even for frequency bands where channel bandwidth is limited, such as for instance 2.5GHz frequency band where channel bandwidth can only be up to 40MHz.

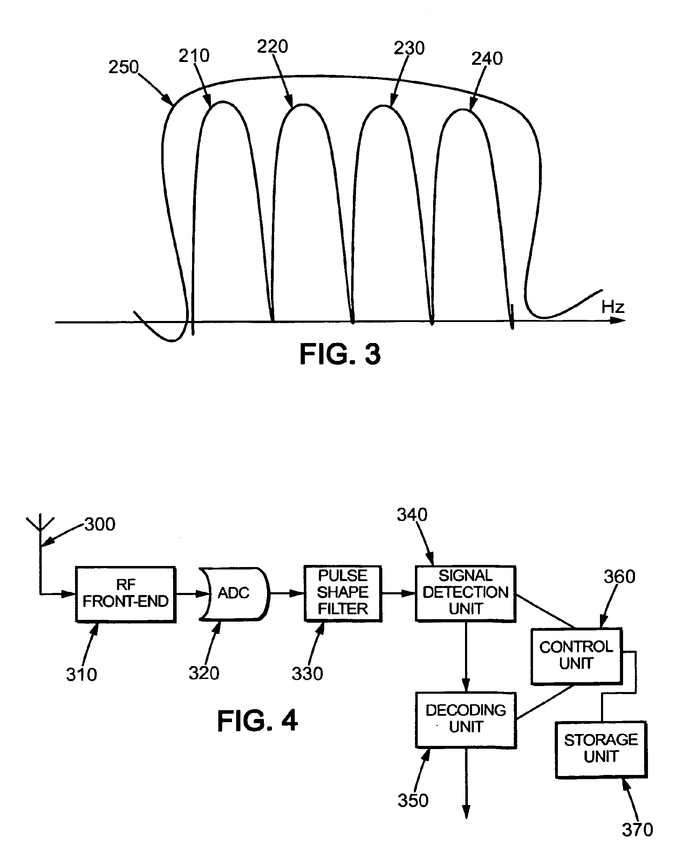

FIG. 3 is a diagram illustrating embodiments of the proposed solution. In the shown example, the network 100 comprises four channels 210, 220, 230 and 240 each having the same frequency bandwidth of 20 MHz. It also comprises one channel 250 having a frequency bandwidth of e.g. 80 MHz that is at least equal to or greater than an aggregated frequency bandwidth corresponding to the sum of the respective frequency bandwidths of channels 210, 220, 230 and 240. Channel 250 is the channel used by the wireless mobile station 150 to perform the process of beacon scanning. By performing the process of beacon scanning using an 80 MHz frequency bandwidth, four channels of 20 MHz frequency bandwidth each can be detected at once. This corresponds to a saving factor of four in total scanning time. In fact, instead of having the total scanning time lasting 400 ms to 1200 ms as illustrated in prior art FIG. 2, the total scanning time in the case of FIG. 3 is only of 100 to 300 ms. It is indeed four times faster to scan four channels of 20 MHz frequency bandwidth at once within a 80 MHz frequency bandwidth than scanning four channels of 20 MHz frequency bandwidth one after the other.

The example in FIG. 3 also corresponds to a saving factor of up to four in power consumption as it is illustrated in FIG. 4. FIG. 4 illustrates embodiments of a wireless mobile station which comprises an antenna 300, a radio frequency (RF) front-end 310, an analog-to-digital converter (ADC) 320, a pulse shape filter 330, a signal detection unit 340, a decoding unit 350, a control unit 360, and a storage unit 370.

In this configuration there are beacon signals received at the antenna 300 that are sent to the ADC 320 in order to be converted into digital signals. The digitals signals corresponding to the beacon signals are further sent to a pulse shape filter 330, mainly to guaranty that the digital signals are within appropriate tolerance limits that may be regulatory. Then, the filtered digital signals are sent to a signal detection unit 340 that is responsible for detecting presence of beacon signal power using cross-correlation analysis or energy measurement methods for instance. The presence of beacon signal power may be represented by beacon signal strength such as a Received Signal Strength Indicator (RSSI). It also may be represented by a channel number or a range of frequencies indicating where presence of signal power was detected. Another possibility is to use a Boolean value that may be associated with a channel number to indicate whether and/or how presence of signal power was detected.

A possible implementation of the signal detection unit 340 may consist in considering beacon signal strength greater than a given threshold such as RSSI thresholds or noise floor threshold. Another implementation of the signal detection unit 340 may use technologies based on correlation measures of signals according to the statistical characteristics of the beacon signals and the surrounding noise by calculating cross-correlation calculations to determine whether beacon signal power was detected by having a certain amount of statistical results being beyond a given threshold. The filtered and detected digital signals are further sent to a decoding unit 350 such as a signal demodulator responsible for retrieving the information contained in the digital signals corresponding to the beacon signals.

Parallel to the signal detection unit 340 and the decoding unit 350, there is a control unit 360 responsible for controlling the signal detection unit 340 and the decoding unit 350. Regarding the signal detection unit 340, the control unit 360 may be used to collect information regarding time of presence and the presence of beacon signal power in the digital signals corresponding to the beacon signals. Time of presence of beacon signal power may be a timestamp of the time at which the presence of signal power has been detected. The information of presence of beacon signal power may be represented by beacon signal strength such as a Received Signal Strength Indicator (RSSI). At least that information aside with the information representing the presence of signal power may be stored in a storage unit 370 that could be implemented, for instance, as a data register.

The control unit 360 also controls the decoding unit 350 by allowing the decoding to be more power efficient by activating the decoding unit 350 only when it is required. In fact, the decoding unit 350 may be activated only for decoding the channels where beacon signal power has been detected in order to obtain APs information such as a MAC address. By activating the decoding unit 350 only when beacon signal power is detected, a saving factor from one to four in power consumption can be observed, referring to in the example of prior art FIG. 2, depending on a number N of channels where beacon signals have been detected.

To speed up even further the decoding process, information contained in the storage 370 could be used by the decoding unit 350 thanks to the control unit 360. For instance, if there are two channels such as channels 210 and 230 that contain beacon signal power within channel 250, thus there will be a saving factor of two in power consumption as compared to prior art as FIG. 2. In fact, in solutions according to prior art as shown in FIG. 2, all of the four channels 210, 220, 230 and 240 are scanned and decoded no matter whether there is signal power or not present in the corresponding channel.

On the contrary, by using embodiments as shown in FIG. 3, the four channels 210, 220, 230 and 240 are scanned simultaneously, however only two of the four channels 210, 220, 230 and 240 are decoded, namely, for instance, channels 210 and 230 that contain beacon signal power.

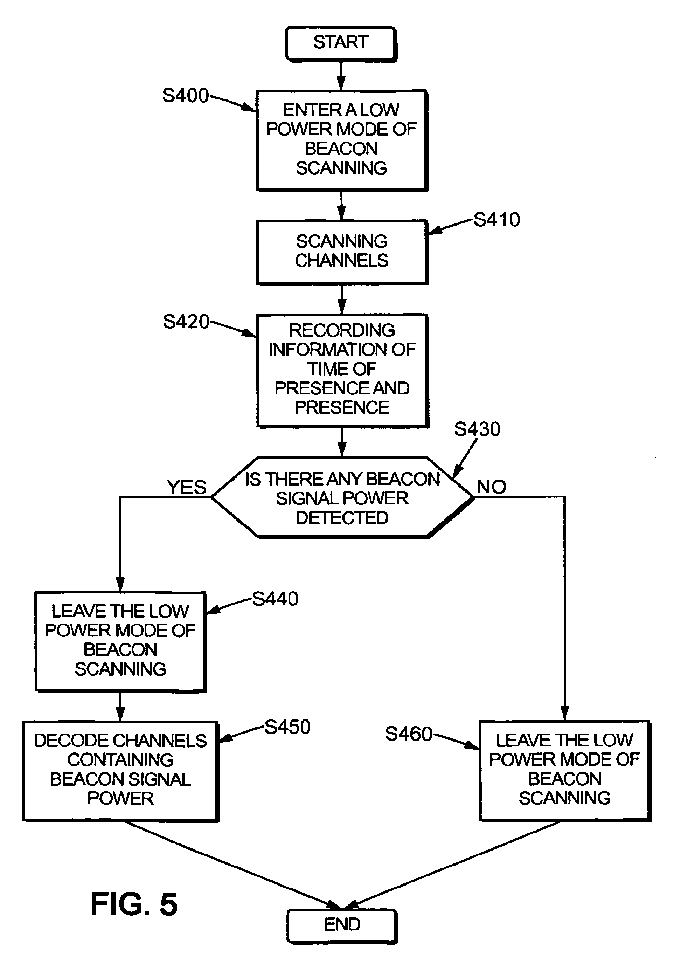

FIG. 5 is a flowchart illustrating embodiments of a method as proposed herein. Depending on the embodiment, additional steps may be added, others removed, and the ordering of the steps rearranged.

Referring to FIG. 5, in step S400, the wireless mobile station enters a low power mode of beacon scanning wherein the components that are unnecessary during the process of beacon signal detection (such as a decoding unit 350) are disabled. This helps saving power consumption on the wireless mobile station.

Then, in step S410, a beacon scanning is performed during a given channel scanning time window, of preferably about 100 ms to 300 ms duration, on a set of channels. This scanning is performed within a channel having a frequency bandwidth equal to or greater than an aggregated frequency bandwidth corresponding to the sum of the respective bandwidths of the set of channels. In step S420, information of time of presence and presence of beacon signal power in the scanned channels are recorded in a storage unit, such as a data register.

The time of presence of beacon signal power may be defined by a timestamp indicating the time at which the presence of signal power has been detected. The information of presence of beacon signal power may be represented by beacon signal strength such as a Received Signal Strength Indicator (RSSI).

Then at step S430, a test is carried on as to whether there was any beacon signal power detected in the scanned channels. If the answer is yes, then only the identified channels are decoded at step S450 by first leaving the low power mode of beacon scanning in step S440. The concerned channels may be identified by, for instance, reading the content of the storage unit. The decoded information may be an AP identifier such as a MAC address.

On the contrary, if the answer is no, then the algorithm stops by first leaving the low power mode of beacon scanning in step S460. While leaving the low power mode of beacon scanning in steps S440 and S460, the components that were unnecessary during the process of beacon signal detection such as a decoding unit 350 are enabled. This mechanism permits the reduction of power consumption since these components can be powered-up only when necessary, namely on a next channel scanning time window, for instance, subsequent to the former channel scanning time window, when beacon signal power is detected for the identified channels.

The embodiments presented herein above are applicable not only to WLAN, but also more generally to any wireless communication networks wherein a wireless mobile station may use a channel having a frequency bandwidth equal to or greater than the aggregated frequency bandwidth of the set of channels associated or not with APs to perform beacon scanning.

While embodiments have been illustrated and described in details in the drawings and foregoing description, it is to be understood that the above-described illustration and description are to be considered illustrative and exemplary only, the proposed solution being not restricted to the disclosed embodiments. Other variations to the disclosed embodiments can be understood and effected by those skilled in the art in practicing the claimed proposed solution, from a study of the drawings, the disclosure and the appended claims. It is therefore intended that such variations be included within the scope of the Claims.

In the claims, the word "comprising" does not exclude other elements or steps, and the indefinite article "a" or "an" does not exclude a plurality. A single unit may fulfil the functions of several items recited in the claims. The mere fact that different features are recited in mutually different dependent claims does not indicate that a combination of these features cannot be advantageously used. Any reference signs in the claims should not be construed as limiting the scope of the proposed solution.

## Claims

1. A method of performing a beacon scanning of wireless Access Points, APs, (110,120,130,140) by a wireless mobile station (150), at a start-up of the wireless mobile station or during handover, in a wireless local area network, WLAN, the method comprising:
- entering a low power mode of beacon scanning in which a beacon signal detection unit (340) is active and a signal decoding unit (350) is not active, at the beginning of a first channel scanning time window;
- scanning simultaneously a set of channels (210,220,230,240) during the first channel scanning time window in the low power mode of beacon scanning;
- recording within a list, at least information regarding time of presence of beacon signal power detected in the set of channels during the first channel scanning time window in the low power mode of beacon scanning;
- leaving the low power mode of beacon scanning and activating at least the decoding unit at the end of the first channel scanning time window responsive to presence of beacon signal power having been detected within the set of channels in the low power mode of beacon scanning; and,
- decoding, using the list and during a second channel scanning time window subsequent to the first beacon scanning time window, the channels for which beacon signal power has been detected in the low power mode of beacon scanning.

2. The method according to claim 1, wherein the set of channels comprises a number N of adjacent channels, where N is an integer.

3. The method according to claim 1, wherein the set of channels comprises a number N of non- adjacent channels, where N is an integer.

4. The method according to any one of claims 1 to 3, wherein the duration of the first channel scanning time window is comprised between about 100 ms and about 300 ms.

5. The method according to any one of claims 1 to 4, wherein the presence of beacon signal power is considered to be detected when corresponding beacon signal strength is greater than a given threshold.

6. The method according to claim 5, wherein the beacon signal strength is representative of a receive signal strength measurement such as Received Signal Strength Indicator, RSSI, and the given threshold is representative of a receive signal strength threshold such as RSSI thresholds or a noise floor threshold.

7. The method according to any one of claims 1 to 6, wherein the list additionally contains information indicating where, whether or how the presence of a beacon signal power was detected such as a channel number, a Boolean value or a beacon signal strength or a range of frequencies.

8. The method according to any one of claims 1 to 7, wherein the frequency bandwidth wherein scanning simultaneously a set of channels is performed has a bandwidth equal to or greater than an aggregated bandwidth corresponding to the sum of the respective frequency bandwidths of the set of channels.

9. A wireless mobile station (150) for performing a beacon scanning of wireless Access Points, APs, (110,120,130,140) at a start-up of the wireless mobile station or during handover, in a wireless local area network, WLAN, the wireless mobile station comprising:
- a unit configured for entering a low power mode of beacon scanning in which a beacon signal detection unit (340) is active and a signal decoding unit (350) is not active, at the beginning of a first channel scanning time window;
- a unit configured for scanning simultaneously a set of channels during the first channel scanning time window in the low power mode of beacon scanning;
- a unit configured for recording within a list, at least information regarding time of presence of beacon signal power detected in the set of channels during the first channel scanning time window in the low power mode of beacon scanning;
- a unit configured for leaving the low power mode of beacon scanning and activating at least the decoding unit at the end of the first channel scanning time window responsive to presence of beacon signal power having been detected within the set of channels in the low power mode of beacon scanning; and,
- a unit configured for decoding, using the list and during a second channel scanning time window subsequent to the first beacon scanning time window, the channels for which beacon signal power has been detected in the low power mode of beacon scanning.

10. The wireless mobile station according to claim 9, wherein the set of channels comprises a number N of adjacent channels, where N is an integer.

11. The wireless mobile station according to claim 9, wherein the set of channels comprises a number N of non- adjacent channels, where N is an integer.

12. The wireless mobile station according to any one of claims 9 to 11, wherein the duration of the first channel scanning time window is comprised between about 100 ms and about 300 ms.

13. The wireless mobile station according to any one of claims 9 to 12, wherein the presence of beacon signal power is considered to be detected when corresponding beacon signal strength is greater than a given threshold.

14. The wireless mobile station according to claim 13, wherein the beacon signal strength is representative of a receive signal strength measurement such as Received Signal Strength Indicator, RSSI, and the given threshold is representative of a receive signal strength threshold such as RSSI thresholds or a noise floor threshold.

15. The wireless mobile station according to any one of claims 9 to 14, wherein the list additionally contains information indicating where, whether or how the presence of a beacon signal power was detected such as a channel number, a Boolean value or a beacon signal strength or a range of frequencies.

16. The wireless mobile station according to any one of claims 9 to 15, the frequency bandwidth wherein scanning simultaneously a set of channels is performed has a bandwidth equal to or greater than an aggregated bandwidth corresponding to the sum of the respective frequency bandwidths of the set of channels.

## Patentansprüche

1. Verfahren zum Durchführen eines Bakenabtastens von drahtlosen Zugangspunkten, APs (Access Points), (110, 120, 130, 140) durch eine drahtlose Mobilstation (150) beim Hochfahren der drahtlosen Mobilstation oder während der Übergabe in einem drahtlosen lokalen Netzwerk, WLAN, wobei das Verfahren beinhaltet:
- Eintreten in einen Niedrigenergiemodus des Bakenabtastens, in dem eine Baken-Signalnachweiseinheit (340) aktiv ist und eine Signaldekodierungseinheit (350) nicht aktiv ist zu Beginn eines ersten Kanalabtast-Zeitfensters;
- gleichzeitiges Abtasten eines Satzes von Kanälen (210, 220, 230, 240) während des ersten Kanalabtast-Zeitfensters in dem Niedrigenergiemodus des Bakenabtastens;
- Aufnahme wenigstens von Informationen bezüglich der Zeit der Anwesenheit von Bakensignalleistung, die in dem Satz von Kanälen während des ersten Kanalabtast-Zeitfensters in dem Niedrigenergiemodus des Bakenabtastens detektiert wurde, in eine Liste;
- Verlassen des Niedrigenergiemodus des Bakenabtastens und Aktivieren wenigstens der Dekodiereinheit am Ende des ersten Kanalabtast-Zeitfensters in Erwiderung auf die innerhalb des Satzes von Kanälen in dem Niedrigenergiemodus des Bakenabtastens nachgewiesene Anwesenheit von Bakensignalleistung; und
- Dekodieren der Kanäle, für welche in dem Niedrigenergiemodus des Bakenabtastens Bakensignalleistung detektiert wurde unter Verwendung der Liste und während eines zweiten Kanalabtast-Zeitfensters im Anschluss an das erste Kanalabtast-Zeitfenster.

2. Verfahren nach Anspruch 1, wobei der Satz von Kanälen eine Anzahl N von benachbarten Kanälen aufweist, wobei N eine ganze Zahl ist.

3. Verfahren nach Anspruch 1, wobei der Satz von Kanälen eine Anzahl N von nicht benachbarten Kanälen aufweist, wobei N eine ganze Zahl ist.

4. Verfahren nach einem der Ansprüche 1 bis 3, wobei die Dauer des ersten Kanalabtast-Zeitfensters zwischen etwa 100 ms und etwa 300 ms liegt.

5. Verfahren nach einem der Ansprüche 1 bis 4, wobei das Vorhandensein von Bakensignalleistung als nachgewiesen angesehen wird, wenn die entsprechende Bakensignalstärke größer als eine gegebene Schwelle ist.

6. Verfahren nach Anspruch 5, wobei die Bakensignalstärke repräsentativ ist für eine Empfangssignalstärkenmessung, wie "Received Signal Strength Indicator, RSSI" und die gegebene Schwelle repräsentativ ist für eine Empfangssignalstärkenschwelle, wie RSSI-Schwellen oder einer Rauschuntergrundschwelle.

7. Verfahren nach einem der Ansprüche 1 bis 6, wobei die Liste zusätzlich Informationen enthält, welche angeben, wo, ob oder wie das Vorhandensein einer Bakensignalleistung nachgewiesen wurde, wie eine Kanalnummer, ein Booie'scher Wert oder eine Bakensignalstärke oder ein Frequenzbereich.

8. Verfahren nach einem der Ansprüche 1 bis 7, wobei die Frequenzbandbreite, worin gleichzeitiges Abtasten eines Satzes von Kanälen durchgeführt wird, eine Bandbreite hat, die gleich groß ist wie oder größer ist als eine zusammengesetzte Bandbreite, die der Summe der entsprechenden Frequenzbandbreiten des Satzes von Kanälen entspricht.

9. Drahtlose Mobilstation (150) zum Durchführen eines Bakenabtastens von drahtlosen Zugangspunkten, APs (Access Points), (110, 120, 130, 140) beim Hochfahren der drahtlosen Mobilstation oder während einer Übergabe in einem drahtlosen lokalen Netzwerk, WLAN, wobei die drahtlose Mobilstation aufweist:
- eine Einheit, die eingerichtet ist, einen Niedrigenergiemodus des Bakenabtastens einzugeben, in dem eine Bakensignalnachweiseinheit (340) aktiv ist und eine Signaldekodierungseinheit (350) nicht aktiv ist, zu Beginn eines ersten Kanalabtast-Zeitfensters;
- eine Einheit, die konfiguriert ist zum gleichzeitigen Abtasten eines Satzes von Kanälen während des ersten Kanalabtast-Zeitfensters in dem Niedrigenergiemodus des Bakenabtastens;
- eine Einheit, die dazu eingerichtet ist, in eine Liste wenigstens Informationen bezüglich der Zeit des Vorhandenseins von Bakensignalleistung aufzunehmen, die in dem Satz von Kanälen während des ersten Kanalabtast-Zeitfensters in dem Niedrigenergiemodus des Bakenabtastens nachgewiesen wurde;
- eine Einheit, die dazu eingerichtet ist, den Niedrigenergiemodus des Bakenabtastens zu verlassen und wenigstens die Dekodierungseinheit am Ende des ersten Kanalabtast-Zeitfensters in Erwiderung auf das Vorhandensein von Bakensignalleistung zu aktivieren, die innerhalb des Satzes von Kanälen in dem Niedrigenergiemodus des Bakenabtastens nachgewiesen wurde; und
- eine Einheit, die dazu eingerichtet ist, die Kanäle, für welche Bakensignalleistung in dem Niedrigenergiemodus des Bakenabtastens nachgewiesen wurde, unter Verwendung der Liste und während eines zweiten Kanalabtast-Zeitfensters im Anschluss an das erste Bakenabtast-Zeitfenster zu dekodieren.

10. Drahtlose Mobilstation nach Anspruch 9, wobei der Satz von Kanälen eine Anzahl N von benachbarten Kanälen aufweist, wobei N eine ganze Zahl ist.

11. Drahtlose Mobilstation nach Anspruch 9, wobei der Satz von Kanälen eine Anzahl N von nicht benachbarten Kanälen aufweist, wobei N eine ganze Zahl ist.

12. Drahtlose Mobilstation nach einem der Ansprüche 9 bis 11, wobei die Zeitdauer des ersten Kanalabtast-Zeitfensters zwischen etwa 100 ms und etwa 300 ms beträgt.

13. Drahtlose Mobilstation nach einem der Ansprüche 9 bis 12, wobei die Anwesenheit von Bakensignalleistung als nachgewiesen angesehen wird, wenn die entsprechende Bakensignalstärke größer ist als eine gegebene Schwelle.

14. Drahtlose Mobilstation nach Anspruch 13, wobei die Bakensignalstärke repräsentativ ist für eine Empfangssignalstärkenmessung, wie "Received Signal Strength Indicator, RSSI", und die gegebene Schwelle repräsentativ ist für eine Empfangssignalstärkenschwelle, wie RSSI-Schwellen oder eine Rauschuntergrundschwelle.

15. Drahtlose Mobilstation nach einem der Ansprüche 9 bis 14, wobei die Liste zusätzlich Informationen darüber enthält, wo, ob oder wie die Anwesenheit einer Bakensignalstärke nachgewiesen wurde, so wie eine Kanalnummer, ein Boole'scher Wert oder einer Bakensignalstärke oder ein Frequenzbereich.

16. Drahtlose Mobilstation nach einem der Ansprüche 9 bis 15, wobei die Frequenzbandbreite, in welcher gleichzeitiges Abtasten eines Satzes von Kanälen durchgeführt wird, eine Bandbreite aufweist, die gleich groß ist wie oder größer ist als eine zusammengesetzte Bandbreite entsprechend der Summe der jeweiligen Frequenzbandbreiten des Satzes von Kanälen.

## Revendications

1. Procédé de réalisation d'un balayage de balises de Points d'Accès sans fil, AP, (110, 120, 130, 140) par une station mobile sans fil (150), lors d'un démarrage de la station mobile sans fil ou pendant un transfert, dans un réseau local sans fil, WLAN, le procédé consistant à :
- entrer dans un mode de balayage de balises à faible puissance dans lequel une unité de détection de signal de balise (340) est active et une unité de décodage de signal (350) n'est pas active, au début d'une première fenêtre temporelle de balayage de canal ;
- balayer simultanément un ensemble de canaux (210, 220, 230, 240) pendant la première fenêtre temporelle de balayage de canal dans le mode de balayage de balises à faible puissance ;
- enregistrer, dans une liste, au moins des informations relatives à l'instant de la présence de la puissance de signal de balise détectée dans l'ensemble de canaux pendant la première fenêtre temporelle de balayage de canal dans le mode de balayage de balises à faible puissance ;
- quitter le mode de balayage de balises à faible puissance et activer au moins l'unité de décodage à la fin de la première fenêtre temporelle de balayage de canal en réponse au fait que la présence de la puissance de signal de balise a été détectée dans l'ensemble de canaux dans le mode de balayage de balises à faible puissance ; et
- décoder, en utilisant la liste et pendant une deuxième fenêtre temporelle de balayage de canal postérieure à la première fenêtre temporelle de balayage de canal, les canaux pour lesquels la puissance de signal de balise a été détectée dans le mode de balayage de balises à faible puissance.

2. Procédé selon la revendication 1, dans lequel l'ensemble de canaux comprend un nombre N de canaux adjacents, N étant un nombre entier.

3. Procédé selon la revendication 1, dans lequel l'ensemble de canaux comprend un nombre N de canaux non adjacents, N étant un nombre entier.

4. Procédé selon l'une quelconque des revendications 1 à 3, dans lequel la durée de la première fenêtre temporelle de balayage de canal est comprise entre environ 100 ms et environ 300 ms.

5. Procédé selon l'une quelconque des revendications 1 à 4, dans lequel la présence de la puissance de signal de balise est considérée comme étant détectée lorsque le niveau du signal de balise correspondant est plus grand qu'un seuil donné.

6. Procédé selon la revendication 5, dans lequel le niveau du signal de balise est représentatif d'une mesure de niveau de signal reçu telle qu'un indicateur de niveau de signal reçu, RSSI, et le seuil donné est représentatif d'un seuil de niveau de signal reçu tel que des seuils RSSI ou un seuil plancher de bruit.

7. Procédé selon l'une quelconque des revendications 1 à 6, dans lequel la liste contient en outre des informations indiquant si - ou bien où ou comment - la présence d'une puissance de signal de balise a été détectée, telles qu'un numéro de canal, une valeur booléenne ou un niveau de signal de balise ou une plage de fréquences.

8. Procédé selon l'une quelconque des revendications 1 à 7, dans lequel la largeur de bande de fréquence, lorsqu'on effectue un balayage simultané d'un ensemble de canaux, a une valeur de largeur de bande égale ou supérieure à une largeur de bande agrégée correspondant à la somme des largeurs de bandes de fréquence respectives de l'ensemble de canaux.

9. Station mobile sans fil (150) pour la réalisation d'un balayage de balises de Points d'Accès sans fil, AP, (110, 120, 130, 140) lors d'un démarrage de la station mobile sans fil ou pendant un transfert, dans un réseau local sans fil, WLAN, la station mobile sans fil comprenant :
- une unité configurée pour entrer dans un mode de balayage de balises à faible puissance dans lequel une unité de détection de signal de balise (340) est active et une unité de décodage de signal (350) n'est pas active, au début d'une première fenêtre temporelle de balayage de canal ;
- une unité configurée pour balayer simultanément un ensemble de canaux pendant la première fenêtre temporelle de balayage de canal dans le mode de balayage de balises à faible puissance ;
- une unité configurée pour enregistrer, dans une liste, au moins des informations relatives à l'instant de la présence de la puissance de signal de balise détectée dans l'ensemble de canaux pendant la première fenêtre temporelle de balayage de canal dans le mode de balayage de balises à faible puissance ;
- une unité configurée pour quitter le mode de balayage de balises à faible puissance et activer au moins l'unité de décodage à la fin de la première fenêtre temporelle de balayage de canal en réponse au fait que la présence de la puissance de signal de balise a été détectée dans l'ensemble de canaux dans le mode de balayage de balises à faible puissance ; et
- une unité configurée pour décoder, en utilisant la liste et pendant une deuxième fenêtre temporelle de balayage de canal postérieure à la première fenêtre temporelle de balayage de canal, les canaux pour lesquels la puissance de signal de balise a été détectée dans le mode de balayage de balises à faible puissance.

10. Station mobile sans fil selon la revendication 9, dans laquelle l'ensemble de canaux comprend un nombre N de canaux adjacents, N étant un nombre entier.

11. Station mobile sans fil selon la revendication 9, dans laquelle l'ensemble de canaux comprend un nombre N de canaux non adjacents, N étant un nombre entier.

12. Station mobile sans fil selon l'une quelconque des revendications 9 à 11, dans laquelle la durée de la première fenêtre temporelle de balayage de canal est comprise entre environ 100 ms et environ 300 ms.

13. Station mobile sans fil selon l'une quelconque des revendications 9 à 12, dans laquelle la présence de la puissance de signal de balise est considérée comme étant détectée lorsque le niveau du signal de balise correspondant est plus grand qu'un seuil donné.

14. Station mobile sans fil selon la revendication 13, dans laquelle le niveau du signal de balise est représentatif d'une mesure de niveau de signal reçu telle qu'un indicateur de niveau de signal reçu, RSSI, et le seuil donné est représentatif d'un seuil de niveau de signal reçu tel que des seuils RSSI ou un seuil plancher de bruit.

15. Station mobile sans fil selon l'une quelconque des revendications 9 à 14, dans laquelle la liste contient en outre des informations indiquant si - ou bien où ou comment - la présence d'une puissance de signal de balise a été détectée, telles qu'un numéro de canal, une valeur booléenne ou un niveau de signal de balise ou une plage de fréquences.

16. Station mobile sans fil selon l'une quelconque des revendications 9 à 15, dans laquelle la largeur de bande de fréquence, lorsqu'on effectue un balayage simultané d'un ensemble de canaux, a une valeur de largeur de bande égale ou supérieure à une largeur de bande agrégée correspondant à la somme des largeurs de bandes de fréquence respectives de l'ensemble de canaux.
